# EUROPÄISCHE PATENTSCHRIFT

(11) **EP 0 624 693 B1**
(45) Veröffentlichungstag und Bekanntmachung des Hinweises auf die Patenterteilung: **14.04.1999**
(21) Anmeldenummer: 94100391.5
(22) Anmeldetag: 13.01.1994
(51) Int. Cl.: E02D 5/18, F16L 37/244, E21B 17/07, E02D 5/38

(54) **Verfahren und Vorrichtung zur segmentweisen Herstellung von Schlitzwänden im Tiefbau**
Method and device for the stepwise manufacture of sealing aprons in civil engineering
Procédé et dispositif de réalisation des ouvrages d'étanchéité en segment, dans la construction civile

(30) Priorität: 12.05.1993 DE 4315837
(43) Veröffentlichungstag der Anmeldung: 17.11.1994
(73) Patentinhaber: MFS MASCHINENFABRIK GmbH & Co. KG, D-26384 Wilhelmshaven (DE)
(72) Erfinder: Fischer, Hermann,, D-26452 Sande (DE)
(74) Vertreter: Herrmann-Trentepohl, Werner, Dipl.-Ing.

(56) Entgegenhaltungen:
- EP-A- 0 458 289
- DE-B- 1 239 993
- GB-A- 2 179 083
- US-A- 4 367 057

## Beschreibung

Die Erfindung betrifft ein Verfahren zur segmentweisen Herstellung von Schlitzwänden im Tiefbau gemäß dem Oberbegriff des Anspruches 1. Außerdem betrifft die Erfindung Vorrichtungen zur Durchführung des erfindungsgemäßen Verfahrens.

Schlitzwände dienen im Tiefbau u. a. zur Sicherung von Baugruben und entstehen abschnittsweise in Segmenten. Jedes Segment wird in einem von der Oberfläche aus im anstehenden Gebirge ausgehobenen Schlitz, der bis zur Endtiefe der Schlitzwand reicht und zunächst ausgehoben wird, hergestellt. Anschließend wird nach Einbringen der Bewehrung der Schlitz mit härtendem Baustoff aufgefüllt, wobei es sich in der Regel um Beton handelt. Kennzeichend für die Herstellung von Schlitzwänden in der Ortbetonherstellung sind demnach zwei Herstellungsphasen, von denen die erste Phase das Ausheben des Schlitzwandabschnittes unter Abstützung durch die ausbauende Suspension, beispielsweise in Form einer Bentonitaufschlämmung ausmacht, an die sich die zweite Phase anschließt, in der nach dem Bewehren das Einfüllen des härtenden Baustoffes unter gleichzeitiger Verdrängung der Suspension erfolgt. Die Erfindung bezieht sich insbesondere auf diese zweite Phase.

Die segmentweise Herstellung der Schlitzwände ergibt sich u. a. daraus, daß das Verhältnis der horizontalen Länge zur Tiefe der Schlitzwand in den meisten Fällen den Ablauf der beiden Phasen in einem Zuge für eine gegebene Schlitzwand nicht gestattet. Deswegen müssen in der Praxis die Querseiten der Schlitzwandsegmente im Schlitz abgeschalt werden. Das geschieht mit Hilfe von Rohren, wobei es im Einzelfall von der Schlitzwandbreite und/oder der Anschlußfuge abhängt, ob man die Abschalung mit einem zylinderischen oder einem im Querschnitt polygonalen Rohr oder mit mehreren, über die Schlitzwandbreite nebeneinander angeordneten Abschalungsrohren, die dann normalerweise zu einer Einheit zusammengefaßt sind, abschalt. Die Erfindung läßt sich auf diese Möglichkeiten anwenden.

Der Werkstoff der Rohre, die für diese Abschalungen verwendet werden, verbindet sich bei dem Härten des Baustoffes bzw. des Betons zunehmend fest mit dem Baustoff der Schlitzwand. Da man die Schalrohre aus verschiedenen Gründen nicht als verlorene Schalung einsetzt, müssen die Schalrohre aus Metall, insbesondere aus Stahl bestehen und gezogen werden. Bei weitgehend ausgehärtetem Baustoff ist das unmöglich, weil die Haftkräfte des Baustoffes an den Rohren nicht mehr mit den von dem zum Ziehen der Rohre verwendeten hydraulischen Hubvorrichtungen erzeugten Hebekräften überwunden werden können. Man zieht deswegen die Schalrohre in einem sorgfältig gewählten zeitlichen Abstand vom Einbringen des Baustoffes, nämlich wenn der Baustoff zwar eine hinreichende Standfestigkeit entwickelt hat, seine Haftkräfte aber noch nicht das volle Maß angenommen haben, das das Ziehen der Schalrohre unmöglich macht. In der Praxis erfolgt das Ziehen der Schalrohre z. B. erst nachdem ein Zeitraum von 4 bis 6 Stunden nach dem Betonieren vergangen ist.

Eine weitere Voraussetzung für das erfolgreiche Herstellen von Schlitzwänden in der beschriebenen Weise ergibt sich aus dem Ausbau des herzustellenden Schlitzes durch die beschwerte Flüssigkeit bzw. Suspension im Zusammenhang mit der Verminderung der unvermeidlichen Lärmbelästigung der Umgebung der Baustelle. Dies führt in der Regel dazu, daß tagsüber der Schlitz ausgehoben und nachmittags bereits betoniert werden muß. Einerseits wird dann ein Teil der Lärmbelästigung auf die Tagesstunden verlegt, in denen sie weniger stört, andererseits läßt sich nur so verhindern, daß etwa durch Sedimentieren der Suspension Fehler der Schlitzwand auftreten oder gar Einsturzgefahr besteht. Diese Arbeitsweise setzt dann allerdings voraus, daß abends und/oder noch während der Nacht die Schalrohre gezogen werden. Auch dieser Vorgang ist jedoch mit u. U. erheblichem Lärm verbunden, weil die Schalrohre außer mit der Hebevorrichtung mit einem Kran manipuliert werden, wenn sie gezogen werden. Das führt zu sehr erheblichen Schwierigkeiten mit den Anliegern. Wenn man jedoch deren Beschwerden Rechnung trägt und versucht, das Ziehen der Schalrohre in die Morgenstunden des folgenden Tages zu verlegen, kann dies zu festsitzenden Schalrohren, Überlastungen der Zugvorrichtung mit Erdbewegungen am Schlitzwandrand und im Ergebnis zum Verlust der Schalrohre führen, der nicht hingenommen werden kann.

Bei einem bekannten Verfahren ( DE-B- 1239993) besteht die sogenannte Kopfschalung jedes Schlitzabschnittes des mit Hilfe einer Flüssigkeit abgestützten Schlitzes aus einem Stahlrohr, welches nach Erhärten des in den Schlitz eingebrachten Betons gezogen wird.

Bei einem weiteren vorbekannten Verfahren( GB-A- 2179083 ) werden mit Hilfe von Stahlrohren, welche in mit Rohrkupplungen verbundene Rohrzüge unterteilt sind Beton bzw. Stahlbetonpfeiler dadurch hergestellt, daß die Rohre mit durch das Eintreiben der Rohrzüge zusammengefahreren Rohrkupplungen in den Baugrund getrieben und danach innen betoniert werden, worauf nach dem Erhärten des Betons die Rohrzüge unter Ausnutzung des Kupplungsspieles von oben gezogen und der jeweils freigezogenene obere Rohrzug durch Lösen der Kupplung demontiert wird.

Die Erfindung geht deshalb einen anderen, von den bisherigen Herstellungsverfahren abweichenden Weg dessen Grundgedanke im Anspruch 1 wiedergegeben ist. Weitere Merkmale der Erfindung ergeben sich aus den Unteransprüchen.

Erfindungsgemäß wird das Lösen der Schalrohre auf einzelne Rohrzüge verkürzt, deren Längen so bemessen werden können, daß sich jeder Rohrzug auch bei hartem Baustoff von diesem lösen läßt. Hierbei werden die Rohrzüge einzeln bewegt und sobald sie sich von dem Baustoff gelöst haben nach oben gezogen, worauf der folgende Rohrzug gelöst und seinerseits nach oben gehoben wird. Indem man erfindungsgemäß die Rohrzüge miteinander kuppelt, kann man wie bisher jedes Schalrohr in einem Zuge ziehen und aus der Schlitzwand herausheben. Das Kupplungsspiel wird dabei genutzt, um den erforderlichen Bewegungsspielraum bereitzustellen, der für das Ziehen jedes einzelnen Rohrzuges bereitgestellt wird.

Die Erfindung hat den Vorteil, daß sich die Verlegung der Arbeiten, mit denen die Schalrohre aus der Schlitzwand herausgehoben werden auf eine günstige Tageszeit erlaubt, da der Ziehvorgang von dem Härten des Betons nach Erreichen der Standfestigkeit des Schlitzwandsegmentes unabhängig ist. Deswegen ermöglicht die Erfindung das Ziehen und Herausheben der Schalrohre bei dem eingangs beschriebenen Phasenablauf in der Weise, daß es auf die Tageszeit verlegt wird, die für diese damit verbundenen Arbeiten anders als der Abend- und die Nachtzeit unbedenklich ist. Außerdem wird durch die Verlegung dieser Arbeiten in die reguläre Arbeitszeit eine Verbesserung der Rentabilität erreicht, da die Abend- und Nachtstunden nicht mehr gesondert vergütet werden müssen.

Erfindungsgemäß wird das Kupplungsspiel durch die Gewichtsbelastung der Kupplungen eingestellt bzw. verbraucht. Dadurch ist es möglich, die Rohrkupplung beim Einhängen der Schalrohre zusammenzufahren und bis zum Ziehen der Schalrohre zu belassen.

Um einzelne Rohrzüge von den Haftkräften des erhärteten Baustoffes zu lösen, bedarf es eines relativ geringen Hubes. Das bietet die Möglichkeit, die im Anspruch 1 wiedergegeben ist. Hierbei dienen auch die Rohrkupplungen zum Abschalen der Schlitzwand, was eine Vereinfachung der Schalrohre zur Folge hat.

Im einzelnen wird das erfindungsgemäße Verfahren mit den Merkmalen des Anspruches 1 so durchgeführt daß man das Kupplungsspiel konstruktiv vorgibt und daher seine Größe kennt. Man kann dann ohne unmittelbare Beobachtung der Kupplungen in der Schlitzwand beim Einhängen der Schalrohre durch Messen der Rohrlänge und deren Vergleich mit der Schlitzwandtiefe feststellen, ob alle Kupplungen ihr Kupplungsspiel aufgebraucht haben.

Zum besseren Verständnis wird die Erfindung im folgenden beispielsweise anhand von Ausführungsformen der Vorrichtung zur Durchführung des vorstehend beschriebenen Verfahrens im Zusammenhang mit den Figuren der Zeichnung näher erläutert. Es zeigen
- Fig. 1: eine erste Ausführungsform eines in abgebrochener Darstellung und Seitenansicht wiedergegebenen zylinderischen Schalrohres mit geöffneter Kupplung,
- Fig. 2: den Gegenstand der Fig. 1 mit geschlossener Kupplung nach Verbrauch des Kupplungsspieles und
- Fig. 3: eine weitere Ausführungsform der Erfindung in der Fig. 2 entsprechender Darstellung.

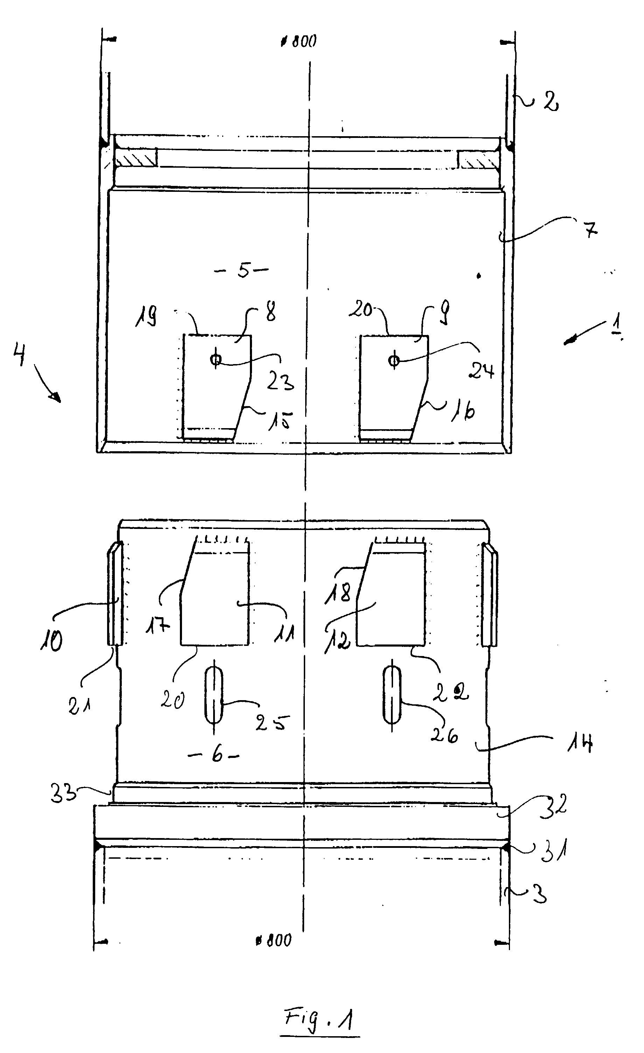

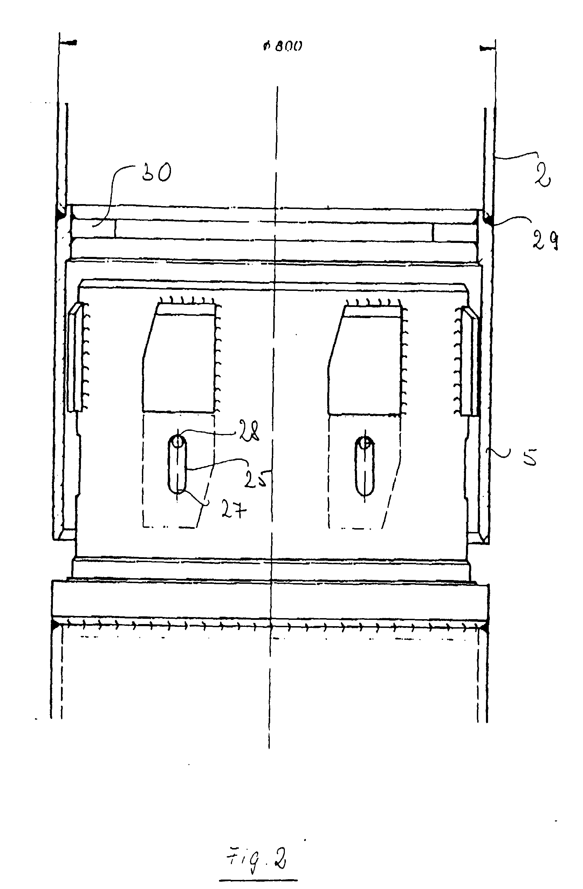

Das in Fig. 1 wiedergegebene Schalrohr 1 ist auf mehrere Rohrzüge 2, 3 aufgeteilt. Die Rohrzüge sind mit Hilfe einer Kupplung 4 zu einem Schalrohr mit ausreichender Länge zusammenzuschließen. Jede Rohrkupplung besteht aus zwei Kupplungshälften 5, 6, von denen die obere als Muffe ausgebildet ist, während die untere einen von der Muffe übergriffenen Zapfen bildet. Im Ausführungsbeispiel der Fig. 1 und 2 handelt es sich um eine Revolverkupplung, welche demzufolge auf der inneren Mantelfläche 7 auf einem Teilkreis in vorzugsweise gleichen Abständen angeordnete Konsolen trägt, von denen die Konsolen 8, 9 im oberen Teil der Fig. 1 sichtbar sind. Diese Konsolen wirken mit jeweils einer Konsole 10 bis 12 zusammen, welche auf dem Außenmantel 14 des Zapfens 6 ihrerseits auf einem Teilkreis um gleiche Abstände gegeneinander versetzt angeordnet sind. Die Konsolen 8, 9 und die Konsolen 10 bis 12 weisen Steuerkanten 15, 16, denen Steuerkanten 17, 18 entsprechen auf. Werden durch Absenken des Rohrzuges 2 bei aufstehendem Rohrzug 3 die Kupplungshälften 5, 6 zusammengebracht, so gleiten die Konsolen 10 bis 12 auf den Steuerkanten 15 und 16 der Konsolen 8 und 9 und spuren die Rohrkupplung 1 ein, bis sich die oberen Tragkanten 19, 20 unter den unteren Tragkanten 20 bis 22 der unteren Konsolen befinden. Eine Drehung des oberen Rohrzuges 2 um einen Winkelbetrag, der die Kanten 19, 20 unter die Kanten 20 bis 22 verbringt, führt beim anschließenden Anheben des Rohres 2 dazu, daß die Kupplung geschlossen wird. Hierbei stützen sich die Tragkanten 19, 20 auf den Konsolenkanten 20 bis 22 ab.

Um eine unzulässige Rückdrehung der Rohre zu vermeiden, werden Nocken 23, 24 der oberen Konsolen 8, 9 in Kulissen 25, 26 eingebracht. Im Ausführungsbeispiel handelt es sich um Rundbolzen, die in Langlöcher eingreifen.

Sobald sich die Nocken in den Kulissen befinden können die Kupplungshälften 5, 6 zusammengefahren werden, soweit das Bewegungsspiel in der Kupplung reicht. Es ist gegeben durch den Anschlag der Nocken 23, 24 am oberen und am unteren Ende 27, 28 der jeweiligen Kulisse 25. Wird die Kupplung zusammengefahren, so wandert der Nocken 25 an das untere Ende 28 der Kulisse, während beim Auseinanderfahren der Kupplung unter Ausnutzung des gesamten Bewegungsspieles der Nocken bis an das obere Ende 27 der Kulisse geführt wird.

Die obere Kupplungshälfte ist ebenso wie der zugeordnete Rohrzug 2 zylinderisch. Ihre Muffenform ermöglicht einen gleichmäßigen Schalrohrdurchmesser bei zusammengefahrenen Kupplungen und umlaufende Schweißnaht 29 zur Verbindung der nach innen ausgeklinkten Stirnseite der Kupplungshälfte 5. Ein Aussteifungsring 30 sorgt dafür, daß die Trennkräfte einwandfrei übertragen werden. Die untere Kupplungshälfte 6 ist entsprechend gestaltet, wobei die umlaufende Schweißnaht 31 einen Bund 32 mit dem oberen Ende des nach unten folgenden Rohrzuges verbindet und die zylinderische Zapfenfläche 14 ihrerseits an einem Bund 33 endet.

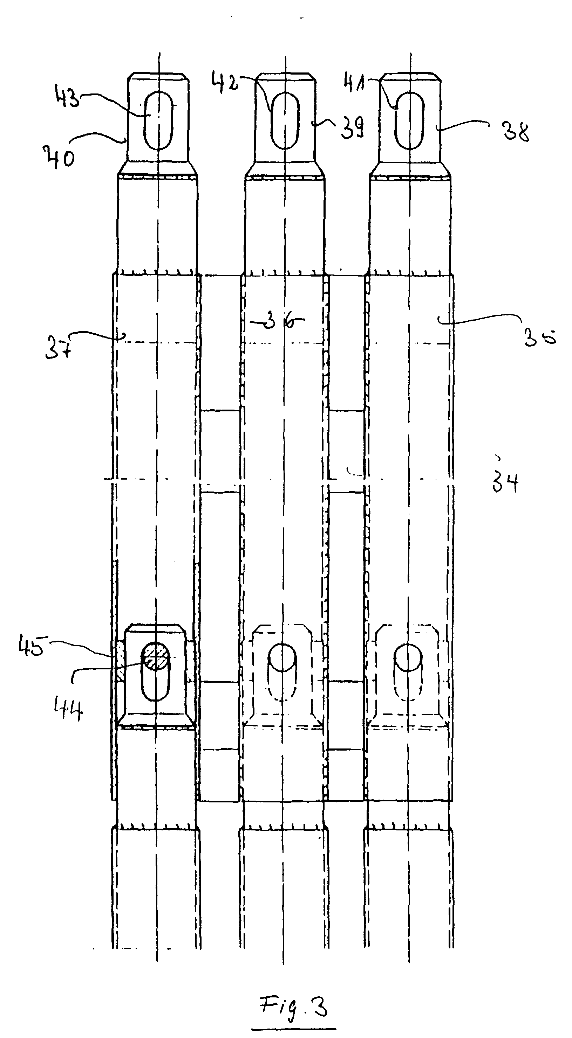

Die Ausführungsform nach Fig. 3 dient zur Abformung einer flachen Fuge an der Schmalseite eines Schlitzwandsegmentes und besteht aus drei miteinander zu einer Einheit durch eine Lasche 34 verbundenen Schalrohren 35 bis 37. Jedes Schalrohr hat einen eigenen Zapfen 38 bis 40, der in diesem Fall mit den Kulissenführungen 41 bis 43 zusammenwirkt, die als Langlöcher verwirktlicht sind, welche die Zapfen radial durchsetzen. Die in die Kulissen eingreifenden Nocken sind als Rundbolzen 44 ausgebildet, die an Rohreinsätzen 45 in den Schalrohren 35 bis 37 befestigt sind. Sie dienen gleichzeitig dem Zusammenhalt des Rohrzuges bei verbrauchtem Kupplungsspiel.

Auch bei dieser Ausführungsform ergibt sich das Kupplungsspiel aus der Länge der Kulissen. Jedoch sind die Kupplungen ohne Rückdrehung lediglich durch Entfernen der Nocken zu lösen.

## Patentansprüche

1. Verfahren zur segmentweisen Herstellung von Schlitzwänden im Tiefbau, bei dem Schlitzwandsegmente an ihren Stirnseiten mit eingehängten Schalrohren (1) abgeschalt, durch Einbringen von härtendem Baustoff im Schlitz unter Verdrängung einer Suspension aus dem Schlitz aufgebaut und die Schalrohre (1) bei standfesten Baustoff gezogen werden, dadurch gekennzeichnet, daß die in gekuppelte Rohrzüge (2,3) unterteilten Schalrohre (1) mit durch die Gewichtsbelastung beim Einhängen auseinandergefahrenen Kupplungen (4) ihrer Rohrzüge (2,3) in den Schlitz abgesenkt, unter Ausnutzung des Kupplungsspieles und nach Erreichen der Einbautiefe durch weiteres Absenken des aufstehenden Rohrzuges (2,3) die Kupplungspiele jedes einzelnen Rohrzuges (2,3) von oben nach unten aufgebraucht und auf einen gleichmäßigen Schaldurchmesser gebracht werden, wobei ein übergreifender Teil der zusammengefahrenen Rohrkupplungen (4) zum Abschalen eines Schlitzwandsegmentes mit verwendet wird und daß unter Ausnutzung des Längsspieles der Rohrzügekupplung beim Ziehen der Rohre die Rohrzüge (2,3) nacheinander von oben nach unten in Bewegung gesetzt werden, bevor der zusammenhängende Rohrzug als ganzes in Bewegung gesetzt wird.

2. Vorrichtung zur Durchführung des Verfahrens nach Anspruch 1, mit einem in mehrere Rohrzüge seiner Länge unterteilten Schalrohr wobei die in mehrere durch Teleskoprohrkupplungen (4) verbundenen Rohrzüge (2, 3) unterteilten Schalrohre (1) am unteren ausgeklinkten Ende (5) eines Rohrzuges ein Außenteleskop der Rohrkupplung (4) und am oberen Ende des unteren, anschließenden Rohrzuges (3) einen Kupplungszapfen (6) gefahrener Kupplung aufweisen, wobei das Außenteleskop und der Zapfen (6) mit einer Drehkupplung verbunden sind, die eine Längsführung (23-26) über die Länge des Kupplungsspieles aufweist.

3. Vorrichtung nach Anspruch 2, dadurch gekennzeichnet, daß Kulissen (25, 26) in den Zapfen (6) und Nocken (23, 24) in den übergreifenden Teleskopen (5) angeordnet sind.

4. Vorrichtung nach Anspruch 3, dadurch gekennzeichnet, daß die Kulissen als koaxiale Langlöcher (25, 26) und die eingreifenden Nocken (23, 24) als Rundbolzen ausgebildet sind, wobei die oberen und unteren Rundungen der Langlöcher das Kupplungsspiel begrenzen.

5. Vorrichtung nach Anspruch 3, dadurch gekennzeichnet, daß sich die Kupplungshälften mit den Nocken in den Kulissen abstützen.

## Claims

1. Method for the segment-wise manufacture of subterraneous curtains in civil engineering, wherein subterraneous curtain segments at their front faces are boarded with suspended forming pipes (1), are build up by introducing hardening building material in the curtain under displacement of a suspension from the curtain, and the forming pipes (1) are retracted when the building material is stable, characterized in that the forming pipes (1) subdivided into coupled pipe trains (2, 3) are lowered into the curtain with the couplings (4) of the pipe trains (2, 3) being extended due to the weight load during suspending, by using the coupling play and after reaching the installation depth by further lowering the touched-down pipe train the coupling plays of each individual pipe train (2, 3) are used up from top to bottom and are brought to a uniform forming diameter, wherein an overlapping portion of the assembled pipe couplings (4) also is used for forming a subterraneous curtain segment and that using the longitudinal play of the pipe train coupling during retracting the pipes, the pipe trains are brought into motion one after the other from top to bottom before the connected pipe train as a whole is made move.

2. Device for carrying out the method under claim 1 with a forming pipe subdivided in its length into several pipe trains, wherein the forming pipes (1) subdivided into several pipe trains (2, 3) connected by telescope couplings (4) comprise an outside telescope of the pipe coupling (4) at the lower released end (5) of a pipe train and a coupling pin (6) of the engaged coupling at the upper end of the lower subsequent pipe train (3), wherein the outside telescope and the pin (6) are connected by a rotating joint comprising a longitudinal guide (23 to 26) over the length of the coupling play.

3. Device under claim 2, characterized in that connecting members (25, 26) are arranged in the pin (6) and cams (23, 24) are arranged in the overlapping telescopes (5).

4. Device under claim 3, characterized in that said connecting members are built as coaxial slots (25, 26) and the engaging cams are formed as round pins, the upper and lower roundings of the slots limiting the coupling play.

5. Device under claim 3, characterized in that the coupling halves are supported by the cams in the connecting members.

## Revendications

1. Procédé de réalisation des rideaux souterrains en segment, dans le génie civile, dans lequel des segments de rideau souterrain sont encoffrés sur la face avec des tuyaux de décoffrage (1) suspendus, sont formés par introduction de matériau de construction durcissant dans le rideau avec déplacement d'une suspension, du rideau, et les tuyaux de décoffrage (1) sont retirés quand le matériau de construction est stable, caractérisé en ce que les tuyaux de décoffrage (1) sectionnés dans un tirage de tuyaux (2, 3) couplés sont descendus dans le rideau avec les embrayages (4) du tirage de tuyaux (2, 3) étirés à force du charge de poids pendant suspendre, par l'usage du jeu d'embrayage et après avoir atteint la profondeur totale par plus descendre le tirage de tuyaux touché au fond, les jeux d'embrayage de chaque tirage de tuyaux (2, 3) individuel sont consommés de haut en bout et sont amenés à un diamètre de décoffrage constant, une zone recouvrante d'embrayages de tuyau (4) composés de même étant utilisée pour former un segment de rideau souterrain, et en ce que par l'usage du jeu longitudinal de tirage de tuyaux pendant que retirer les tuyaux, les tirage de tuyaux sont mises en mouvement l'un après l'autre de haut vers le bas, avant que le tirage de tuyaux raccordé en entier est mis en mouvement.

2. Dispositif de réalisation de procédé selon la revendication 1 avec un tuyau de décoffrage sectionné en longueur dans de tirages de tuyaux (2, 3) plusieurs, les tuyaux de décoffrage (1) sectionnés dans plusieurs tirages de tuyaux (2, 3) raccordés par d'embrayages télescopiques (4) montrant un télescope extérieur d'embrayage de tuyau à l'extrémité basse larguée (5) d'un tirage de tuyaux, et à l'extrémité haute du tirage de tuyaux basse suivant montrant un tourillon d'embrayage (6) de l'embrayage engagé, le télescope extérieur et le tourillon (6) étant raccordés par un joint tournant montrant un guidage longitudinal (23 à 26) hors de la longueur de jeu d'embrayage.

3. Dispositif selon la revendication 2, caractérisé en ce que des coulisses (25, 26) sont placées dans le tourillon (6) et des saillies (23, 24) sont placées dans les télescopes recouvrants (5).

4. Dispositif selon la revendication 3, caractérisé en ce que lesdites coulisses sont formées comme des trous longitudinaux coaxiaux (25, 26) et les saillies accrochants sont formées comme des tourillons ronds, les arrondissages hautes et basses, des trous longitudinaux limitant le jeu d'embrayage.

5. Dispositif selon la revendication 3, caractérisé en ce que les moitiés d'embrayage sont appuyées par les saillies dans les coulisses.
